# EUROPÄISCHE PATENTSCHRIFT

(11) **EP 1 003 658 B1**
(45) Veröffentlichungstag und Bekanntmachung des Hinweises auf die Patenterteilung: **16.10.2002**
(21) Anmeldenummer: 98945209.9
(22) Anmeldetag: 11.08.1998
(51) Int. Cl.: B60T 13/14, B60T 17/18

(54) **VOLLHYDRAULISCHE BREMSKRAFTERZEUGER/HAUPTZYLINDER-EINHEIT MIT VERBESSERTER BREMSDRUCKRÜCKMELDUNG**
FULLY HYDRAULIC BRAKE POWER GENERATOR AND MAIN CYLINDER UNIT WITH IMPROVED BRAKE PRESSURE FEEDBACK
UNITE GENERATEUR DE FORCE DE FREINAGE/MAITRE-CYLINDRE ENTIEREMENT HYDRAULIQUE A CONFIRMATION DE PRESSION DE FREINAGE AMELIOREE

(30) Priorität: 22.08.1997 DE 19736646
(43) Veröffentlichungstag der Anmeldung: 31.05.2000
(73) Patentinhaber: LUCAS INDUSTRIES PUBLIC LIMITED COMPANY, Solihull B90 4LA (GB)
(72) Erfinder: HEIBEL, Helmut, D-56424 Moschheim (DE); KNECHTGES, Josef, D-56727 Mayen (DE)
(74) Vertreter: Beyer, Andreas, Dr.
(86) Internationale Anmeldenummer: EP9805083
(87) Internationale Veröffentlichungsnummer: WO99010215

(56) Entgegenhaltungen:
- DE-A- 2 312 641
- DE-A- 3 409 705
- US-A- 4 534 171

## Beschreibung

Die Erfindung betrifft eine vollhydraulische Bremskrafterzeuger/Hauptzylinder-Einheit gemäß dem Oberbegriff des Anspruchs 1. Eine solche Einheit ist aus US-A-4,534,171 bekannt.

Bei vollhydraulischen Bremskrafterzeuger/Hauptzylinder-Einheiten wird im Gegensatz zu den heute noch überwiegend eingesetzten Bremskraftverstärker/Hauptzylinder-Einheiten die Verstärkung bzw. Erzeugung der Bremskraft nicht mit Hilfe von Unterdruck, sondern auf rein hydraulischem Wege erreicht. Analog zu herkömmlichen Unterdruck-Bremskraftverstärkern wird die vom Fahrzeugführer üblicherweise über ein Bremspedal eingeleitete Betätigungskraft proportional verstärkt, indem gesteuert durch ein Ventil Hydraulikfluid unter Druck einer Verstärkerstufe zugeführt wird, die auf die Druckkammer(n) des Hauptzylinders wirkt und somit in diesen den Bremsdruck aufbaut, der dann über die einzelnen Bremskreise der Fahrzeugbremsanlage an die zugeordneten Radbremsen weitergeleitet wird. Beim Lösen des Bremspedals wird diese Verstärkerstufe dann wieder - gesteuert durch das genannte Ventil - druckentlastet.

Bei bestimmten Ausführungsformen vollhydraulischer Bremskrafterzeuger/Hauptzylinder-Einheiten wird deren Eingangsglied im Normalfall, d.h. bei ordnungsgemäßer Funktion der Verstärkerstufe, nicht mehr zur Krafteinleitung in die Einheit verwendet, sondern nur noch zum Betätigen der Einheit benutzt, indem das Eingangsglied lediglich verschoben wird, beispielsweise durch Niederdrücken eines mit dem Eingangsglied verbundenen Bremspedals. Die Verschiebung des Eingangsgliedes wird sensiert und es wird in Abhängigkeit dieser Verschiebung ein entsprechender Hydraulikdruck in der Verstärkerstufe aufgebaut, um die vom Fahrer gewünschte Bremskraft zu erzeugen. Der Hydraulikdruck stammt dabei aus einer externen Quelle, beispielsweise aus einem Druckspeicher oder von einer schnell ansprechenden Hydraulikpumpe. Nur bei einem Ausfall der hydraulischen Verstärkerstufe kann der Fahrzeugführer durch kräftiges Niedertreten des Bremspedals das Eingangsglied mechanisch mit üblicherweise dem Primärkolben des Hauptzylinders koppeln, um dann durch weiteres Niedertreten des Bremspedals und die sich daraus ergebende Verschiebung des Primärkolbens zumindest einen gewissen Bremsdruck aufzubauen.

Da der Fahrzeugführer die Bremskrafterzeuger/Hauptzylinder-Einheit somit normalerweise nur indirekt betätigt, bekommt er von der Einheit selbst - im Gegensatz zu bisher üblichen Bremskrafterzeuger/Hauptzylinder-Einheiten- am Bremspedal keine Rückmeldung hinsichtlich des in der Einheit aufgebauten Bremsdrucks, was eine dosierte Bremspedalbetätigung erschwert.

Um bei Bremskrafterzeuger/Hauptzylinder-Einheiten ohne direkte Bremsdruckrückmeldung zum Bremspedal die Dosierbarkeit der Bremsanlage zu verbessern, ist es bekannt, eine Bremsdruckrückmeldung zu simulieren, beispielsweise durch eine Federanordnung, so daß dem Fahrer das gewohnte Verhalten einer herkömmlichen Bremskraftverstärker/Hauptzylinder-Einheit, bei der höhere Bremsdrücke einen höheren Pedaldruck erfordern, künstlich vermittelt wird. Die bekannten Anordnungen zur künstlich erzeugten Bremsdruckrückmeldung haben jedoch das Problem, daß dann, wenn die hydraulische Verstärkerstufe nicht funktioniert, zur Bremsung zunächst die der künstlichen Bremsdruckrückmeldung zum Bremspedal dienende Federkraft vom Fahrer überwunden werden muß, bevor ein Bremsdruckaufbau durch eine entsprechend stärkere Betätigung des Bremspedals möglich ist. Der Fahrer kann aufgrund dieses Verhaltens der Bremsanlage das Gefühl bekommen, gegen eine Wand zu treten und deshalb unzutreffenderweise meinen, die Bremsanlage sei völlig funktionsunfähig.

Der Erfindung liegt die Aufgabe zugrunde, einen Bremskrafterzeuger bzw. eine Bremskrafterzeuger/Hauptzylinder-Einheit mit künstlich erzeugter Bremsdruckrückmeldung dahingehend weiterzubilden, daß bei einem Ausfall der hydraulischen Verstärkerstufe eine Betätigung der Einheit ohne eine spürbare Behinderung durch die der künstlichen Bremsdruckrückmeldung dienenden Federkraft erfolgen kann. Gemäß einer Weiterbildung soll darüber hinaus die Dosierbarkeit solcher Bremskrafterzeuger/Hauptzylinder-Einheiten weiter verbessert werden.

Diese Aufgabe ist ausgehend von der eingangs genannten Bremskrafterzeuger/Hauptzylinder-Einheit erfindungsgemäß dadurch gelöst, daß die der künstlichen Bremsdruckrückmeldung zum Bremspedal dienende Federanordnung eine erste Feder und eine zweite Feder aufweist, die in Serie geschaltet sind, wobei die Federkraft der zweiten Feder spürbar größer ist als die Federkraft der ersten Feder, und daß beim Betätigen der Bremskrafterzeuger/Hauptzylinder-Einheit im Falle eines Versagens der hydraulischen Verstärkerstufe im wesentlichen nur die erste Feder die Bremsdruckrückmeldung übernimmt. Auf diese Weise erhält ein Benutzer der erfindungsgemäßen Bremskrafterzeuger/Hauptzylinder-Einheit bei ordnungsgemäßer Funktion derselben wie gewohnt die erwünschte, simulierte Bremsdruckrückmeldung, ohne daß er bei einem Versagen der hydraulischen Verstärkerstufe zum Bremsen einen übergroßen Widerstand überwinden muß.

Die erfindungsgemäße Lösung hat den weiteren Vorteil, daß auch bei einem Ausfall der hydraulischen Verstärkerstufe das Bremspedal in der Anfangsphase einer Betätigung nicht leer durchläuft, sondern gegen die im Vergleich zur zweiten Feder allerdings deutlich geringere Federkraft der ersten Feder betätigt werden muß. Dadurch werden Panikreaktionen des Fahrers vermieden, zu denen es kommen kann, wenn ein Fahrer das "Durchfallen" des Bremspedals bemerkt, d.h. wenn er beim Niederdrücken des Bremspedals keinen Widerstand spürt.

Die Federkräfte der beiden Federn sollen so unterschiedlich sein, daß ein Benutzer der erfindungsgemäßen Bremskrafterzeuger/Hauptzylinder-Einheit diesen Unterschied deutlich spüren kann. Im Falle eines Versagens der hydraulischen Verstärkerstufe kann der Fahrer diesen Ausfall dann leicht an dem in der Anfangsphase deutlich geringeren Widerstand des Bremspedals bemerken. Spürbar unterschiedliche Federkräfte lassen sich beispielsweise durch spürbar unterschiedliche Federkonstanten der beiden Federn der Federanordnung erreichen. Alternativ ist es auch möglich, Federn mit zumindest ähnlicher Federkonstante zu verwenden, wobei die zweite Feder in stark komprimiertem Zustand und die erste Feder in voll expandiertem Zustand eingebaut wird.

Gemäß einer bevorzugten Ausgestaltung der erfindungsgemäßen Bremskrafterzeuger/Hauptzylinder-Einheit bleibt beim Betätigen derselben im Falle einer ordnungsgemäß funktionierenden hydraulischen Verstärkerstufe die erste Feder hinsichtlich der Bremsdruckrückmeldung wirkungslos. Das bedeutet, daß die simulierte Bremsdruckrückmeldung zum Bremspedal dann nur durch die zweite Feder bewirkt wird. Aufgrund der deutlich unterschiedlichen Federkräfte der beiden Federn dient die zweite Feder bei einem Ausfall der hydraulischen Verstärkerstufe im wesentlichen zur Übertragung von der auf das Bremspedal ausgeübten Betätigungskraft zur ersten Feder, die dann komprimiert wird. Die zweite Feder wird in diesem Fall nicht oder jedenfalls nicht merklich komprimiert.

Bei bevorzugten Ausgestaltungen der erfindungsgemäßen Bremskrafterzeuger/Hauptzylinder-Einheit wird im Falle eines Versagens der hydraulischen Verstärkerstufe die zweite Feder beim Betätigen der Bremskrafterzeuger/Hauptzylinder-Einheit gemeinsam mit dem Eingangsglied nur verschoben und zwar insbesondere relativ zum Gehäuse der Bremskrafterzeuger/Hauptzylinder-Einheit. Dies stellt eine elegante Methode dar, die zweite Feder bei ausgefallener hydraulischer Verstärkerstufe hinsichtlich der simulierten Bremsdruckrückmeldung im wesentlichen wirkungslos zu stellen. Vorteilhaft ist bei einer solchen Ausführungsform die erste Feder an einer Komprimierung gehindert, wenn die hydraulische Verstärkerstufe ordnungsgemäß funktioniert. Besonders bevorzugt wird der Hydraulikdruck in der hydraulischen Verstärkerstufe dazu benutzt, die erste Feder an ihrer Komprimierung zu hindern. Fällt dieser Hydraulikdruck bei einem Versagen der hydraulischen Verstärkerstufe weg, ist die eine Komprimierung der ersten Feder verhindernde Kraft nicht mehr vorhanden und es kommt automatisch zur erfindungsgemäßen Umschaltung zwischen den beiden Federn der Federanordnung, d.h. die zweite Feder kann sich, ohne selbst spürbar komprimiert zu werden, verschieben und die erste Feder komprimieren.

In konstruktiv vorteilhafter Weise weist die Verstärkerstufe einen in der Bohrung des Gehäuses der Bremskrafterzeuger/Hauptzylinder-Einheit verschiebbar geführten Kolben auf und die erste Feder stützt sich funktionell zwischen dem genannten Gehäuse und dem Kolben ab, während die zweite Feder sich funktionell zwischen dem Kolben und dem Eingangsglied abstützt. Der Begriff "funktionell" meint hier, daß die beiden Federn sich von der Funktion her gesehen an den genannten Teilen abstützen; dazu ist es nicht notwendig, daß die beiden Federn sich unmittelbar an den genannten Teilen abstützen.

Bei der zuvor beschriebenen Ausgestaltung ist der Kolben der Verstärkerstufe bevorzugt ein tassenförmiger Hohlkolben, der zusammen mit derjenigen Stirnwand des Primärkolbens die Verstärkerkammer begrenzt, die der einen Stirnwand des Primärkolbens gegenüberliegt, die eine Begrenzungswand der ersten Druckkammer darstellt. Eine solche Ausgestaltung führt zu einer kompakten Bauweise mit wenig Teilen und erlaubt auf einfache Art die Realisierung der zuvor erwähnten, automatischen Umschaltung zwischen den beiden Federn im Falle eines Versagens der Verstärkerstufe.

Vorteilhaft ist bei allen Ausführungsformen der erfindungsgemäßen Bremskrafterzeuger/Hauptzylinder-Einheit die beim Betätigen derselben erfolgende Verschiebung des Eingangsgliedes bedämpft, insbesondere flüssigkeitsbedämpft. Dadurch wird verhindert, daß die zur Simulation der Bremsdruckrückmeldung eingesetzte Federanordnung ins Schwingen gerät und so durch eine Rückkopplung über das Bremspedal Druckschwankungen in den Bremskreisen hervorruft, die als unerwünschte, sprunghafte Verzögerungsänderungen vom Fahrer wahrgenommen werden. Die Bedämpfung des Eingangsgliedes führt somit insbesondere bei einer abrupten Betätigung der Bremskrafterzeuger/Hauptzylinder-Einheit zu einer besseren Dosierbarkeit und einem komfortableren Betriebsverhalten der Bremsanlage.

Die vorgenannte Ausgestaltung einer Bremskrafterzeuger/Hauptzylinder-Einheit ist bevorzugt dadurch weitergebildet, daß das der Einheit zugewandte Ende des Eingangsgliedes kolbenförmig ausgebildet ist und verschieblich in eine Dämpfungskammer ragt, aus der durch eine Verschiebung des Eingangsgliedes verdrängte Flüssigkeit nur durch eine Drossel abfließen kann. Im Sinne einer kompakten Bauweise ist dabei die Dämpfungskammer im Primärkolben angeordnet und das Eingangsglied ist so ausgebildet, daß es die Verstärkerstufe durchsetzt. Das Eingangsglied ragt demnach von außen durch die Verstärkerstufe hindurch bis in die Dämpfungskammer.

Gemäß einer Weiterbildung dieser Ausführungsform ist vorteilhaft ein Endbereich des kolbenförmigen Endes des Eingangsgliedes hohl ausgebildet und auf einem in der Dämpfungskammer angeordneten, zapfenförmigen Vorsprung des Primärkolbens geführt. Wenn bei einer solchen Ausführung auch der hohle Endbereich des Eingangsgliedes mit Hydraulikfluid gefüllt ist, dann weist bevorzugt der zapfenförmige Vorsprung des Primärkolbens einen Kanal auf, der eine Fluidverbindung zwischen dem hohlen Endbereich des Eingangsgliedes und der im Primärkolben angeordneten Dämpfungskammer herstellt. Auf diese Weise kann der genannte Kanal die zuvor erwähnte Drossel bilden; es kann jedoch auch zusätzlich oder alternativ an anderer Stelle eine Drossel vorgesehen sein.

Aus Sicherheitsgründen ist mit Vorteil jede Ausführungsform der erfindungsgemäßen Bremskrafterzeuger/Hauptzylinder-Einheit so ausgestaltet, daß das Eingangsglied beim Betätigen der Einheit automatisch mit dem Primärkolben koppelt, wenn die hydraulische Verstärkerstufe ausfällt. Mit einem solchen mechanischen Durchtrieb ist sichergestellt, daß auch bei defekter Verstärkerstufe jedenfalls nach Durchlaufen eines gewissen Betätigungsweges Bremsdruck in der bzw. den Druckkammern des Hauptzylinders aufgebaut werden kann.

Um den bei einem Ausfall der Verstärkerstufe üblicherweise auftretenden Leerweg des Eingangsgliedes bis zur mechanischen Kopplung mit dem Primärkolben zu vermeiden, ist eine bevorzugte Ausführungsform der erfindungsgemäßen Bremskrafterzeuger/Hauptzylinder-Einheit mit einer separaten Kupplung zwischen dem Eingangsglied und dem Primärkolben versehen, die die beiden Teile automatisch miteinander koppelt, wenn die Verstärkerstufe ausgefallen ist. Hierzu ist der hohle Endbereich des Eingangsgliedes auf einem zapfenförmigen Vorsprung des Primärkolbens geführt, der mit einem Gewinde versehen ist. In dem hohlen Endbereich des Eingangsgliedes ist koaxial zum zapfenförmigen Vorsprung eine um letzteren drehbare Hülse mit einem Innengewinde angeordnet, das mit dem Gewinde am zapfenförmigen Vorsprung selbsthemmungsfrei in Eingriff ist. Die Hülse weist einen Klemmkonus auf und ist mit diesem federnd in Eingriff mit einem komplementären Klemmkonus vorgespannt, der in dem hohlen Endbereich des Eingangsgliedes ausgebildet ist. Des weiteren befindet sich in dem hohlen Endbereich des Eingangsgliedes eine den zapfenförmigen Vorsprung koaxial umgebende und axial verschiebbare Druckhülse, deren axiale Verschiebung gegen die federnde Vorspannung der Hülse ein außer Eingriff kommen der beiden Klemmkonen bewirkt. Im Normalfall, d.h. bei ordnungsgemäßer funktionierender Verstärkerstufe, wird die Druckhülse axial gegen die drehbare Hülse gepreßt, so daß die beiden Klemmkonen außer Eingriff sind und eine Relativverschiebung zwischen dem Eingangsglied und dem zapfenförmigen Vorsprung stattfinden kann, indem sich die drehbare Hülse aufgrund der auf sie wirkenden Axialkraft des Eingangsgliedes und der selbsthemmungsfreien Gewindepaarung zwischen der drehbaren Hülse und dem zapfenförmigen Vorsprung um letzteren dreht. Bei defekter Verstärkerstufe wird kein Druck auf die axial verschiebbare Druckhülse ausgeübt, so daß die beiden Klemmkonen miteinander in Eingriff sind, was eine Drehung der drehbaren Hülse um den zapfenförmigen Vorsprung verhindert und so zu einer direkten, mechanischen Kopplung zwischen dem Eingangsglied und dem Primärkolben führt.

Besonders vorteilhaft steht bei der soeben beschriebenen Ausführungsform der hohle Endbereich des Eingangsgliedes in Fluidverbindung mit der Verstärkerstufe und zwar derart, daß bei ordnungsgemäß funktionierender Verstärkerstufe der Hydraulikdruck in der Verstärkerkammer die Druckhülse gegen die federnde Vorspannung der drehbaren Hülse verschiebt. Da bei einem Ausfall der Verstärkerstufe in der Verstärkerkammer kein ausreichender Hydraulikdruck vorhanden ist, führt eine solche Ausbildung automatisch zur dann erwünschten, mechanischen Kopplung von Eingangsglied und Primärkolben.

Die erfindungsgemäße, automatische Kopplung des Eingangsgliedes mit dem Primärkolben bei einem Ausfall der hydraulischen Verstärkerstufe, die den bisher üblichen Betätigungswegverlust nahezu vollständig eliminiert, ist mit Vorteil auch unabhängig von der erfindungsgemäßen, verbesserten Bremsdruckrückmeldung einsetzbar.

Die Erfindung wird im folgenden anhand zweier Ausführungsbeispiele unter Bezugnahme auf die beigefügten, schematischen Zeichnungen näher erläutert. Es zeigt:
- Fig. 1: eine erste Ausführungsform einer erfindungsgemäßen Bremskrafterzeuger/Hauptzylinder-Einheit im Längsschnitt,
- Fig. 2: eine etwas abgewandelte, zweite Ausführungsform im Längsschnitt und zu Beginn einer Bremsung, und
- Fig. 3: die zweite Ausführungsform im Längsschnitt, jedoch in einer Stellung, die sich während einer Bremsung mit defekter hydraulischer Verstärkerstufe ergibt.

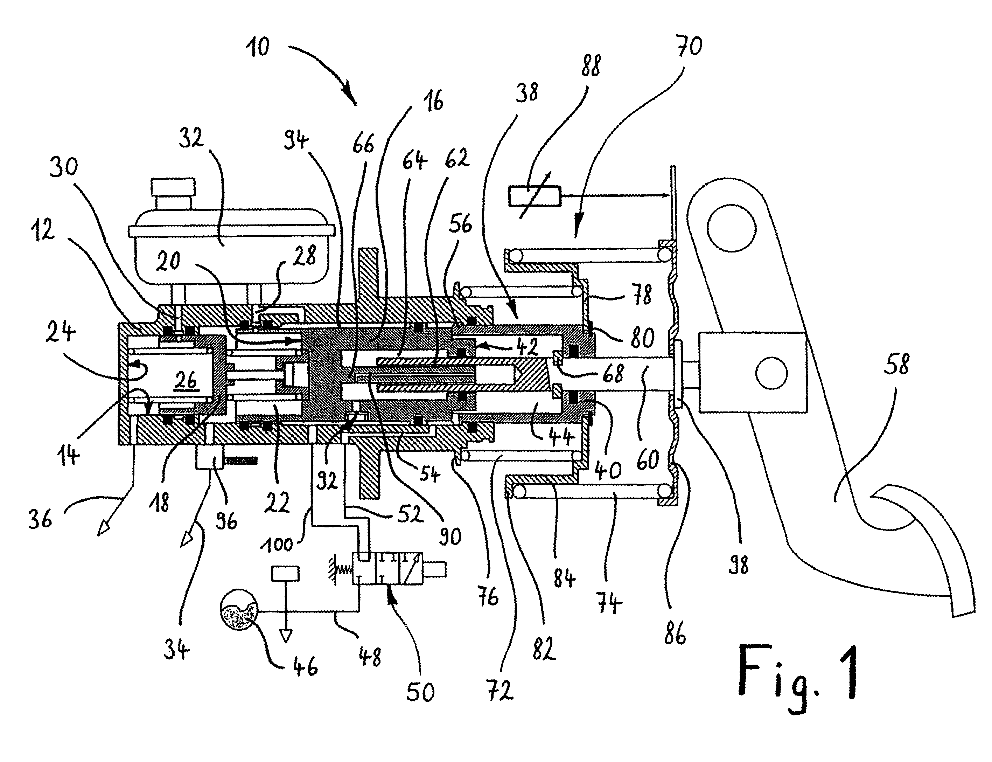

In Fig. 1 ist eine allgemein mit 10 bezeichnete, vollhydraulische Bremskrafterzeuger/Hauptzylinder-Einheit für eine hydraulische Fahrzeugbremsanlage gezeigt. Die Einheit 10 hat ein längliches Gehäuse 12 mit einer darin ausgebildeten Bohrung 14. In der Bohrung 14 sind ein Primärkolben 16 und ein Sekundärkolben 18 abdichtend und verschieblich angeordnet. Eine Stirnwand 20 des Primärkolbens 16 begrenzt zusammen mit der ihr zugewandetne Stirnwand des Sekundärkolbens 18 und der Bohrung 14 eine erste Druckkammer 22, während der hier hohl ausgebildete Sekundärkolben 18 mit der Bohrung 14 und deren Stirnwand 24 eine zweite Druckkammer 26 begrenzt. Beide Druckkammern 22 und 26 stehen über Leitungen 28 bzw. 30 mit einem Vorratsbehälter 32 für Hydraulikfluid in Verbindung. Die erste Druckkammer 22 ist mittels einer nur schematisch angedeuteten Leitung 34 zur Verbindung mit einem ersten Bremskreis der hydraulischen Fahrzeugbremsanlage bestimmt, während die zweite Druckkammer 26 über eine ebensolche Leitung 36 zur Verbindung mit einem zweiten Bremskreis der Fahrzeugbremsanlage bestimmt ist.

Zur Erzeugung einer hydraulischen verstärkten Bremskraft weist die Einheit 10 eine allgemein mit 38 bezeichnete, hydraulische Verstärkerstufe auf. Zu dieser Verstärkerstufe 38 gehört ein in der Bohrung 14 abdichtend und verschieblich geführter Kolben, der hier als tassenförmiger Hohlkolben 40 ausgebildet ist und der wie dargestellt aus der Bohrung 14 des Gehäuses 12 herausragt. Der Hohlraum dieses tassenförmigen Hohlkolbens 40 begrenzt zusammen mit der der Stirnwand 20 gegenüberliegenden, anderen Stirnwand 42 des Primärkolbens 16 eine Verstärkerkammer 44. Der Verstärkerkammer 44 kann aus einem Druckspeicher 46 über eine Verbindungsleitung 48, ein Elektromagnetventil 50, eine weitere Verbindungsleitung 52 und eine Einlaßleitung 54 Hydraulikfluid unter Druck zugeführt werden. Der zugeführte Hydraulikdruck sorgt dafür, daß der Hohlkolben 40 in der in Fig. 1 dargestellten Stellung gehalten wird, indem ein außen am Hohlkolben 40 vorhandener Ringbund 56 gegen einen entsprechenden Anschlag in der Bohrung 14 gedrückt wird, wodurch der Hohlkolben 40 am Herausrutschen aus letzterer gehindert ist.

Zur Betätigung der Bremskrafterzeuger/Hauptzylinder-Einheit 10 ist ein Bremspedal 58 und ein daran angelenktes, stangenförmiges Eingangsglied 60 vorhanden, das sich beim Niederdrücken des Bremspedals 58 bezüglich der Figuren nach links verschiebt. Das Eingangsglied 60 durchsetzt abdichtend und verschieblich den tassenförmigen Hohlkolben 40 und erstreckt sich mit seinem hohlen Endbereich 62 ebenfalls abdichtend und verschieblich in eine Dämpfungskammer 64, die im Primärkolben 16 angeordnet ist und deren Funktion später noch näher erläutert werden wird.

In der Dämpfungskammer 64 befindet sich ein zapfenförmiger Vorsprung 66, der koaxial zum Eingangsglied 60 angeordnet und mit dem Primärkolben 16 fest verbunden ist. Der Durchmesser des hier zylindrischen Vorsprungs 66 ist so gewählt, daß er genau in den hohlen Endabschnitt 62 des Eingangsgliedes 60 paßt. Das Eingangsglied 60 ist somit auf dem zapfenförmigen Vorsprung 66 geführt. In Fig. 1 ist die Ausgangsstellung des Eingangsgliedes 60 dargestellt, die durch einen auf dem Eingangsglied 60 angeordneten Sprengring 68 definiert wird, der in der Ausgangsstellung in der Verstärkerkammer 44 am Boden des tassenförmigen Hohlkolbens 40 anliegt.

Zur künstlichen, d.h. simulierten Bremsdruckrückmeldung auf das Bremspedal 58 weist die Bremskrafterzeuger/Hauptzylinder-Einheit eine allgemein mit 70 bezeichnete Federanordnung auf, die im dargestellten Ausführungsbeispiel aus einer ersten Feder 72 und einer zweiten Feder 74 besteht. Die erste Feder 72 ist eine Schraubenfeder, die den Hohlkolben 40 koaxial umgibt und die zwischen einem Abstützflansch 76 außen am Gehäuse 12 der Einheit 10 und einem ersten, hier im wesentlichen hutförmigen Halteblech 78 eingespannt ist, das außen auf dem Boden des Hohlkolbens 40 gehalten ist, beispielsweise mittels eines Sprengrings 80. Die ebenfalls als Schraubenfeder ausgebildete und koaxial zum Eingangsglied 60 angeordnete zweite Feder 74 hat einen größeren Durchmesser als die erste Feder 72. Sie stützt sich mit ihrem einen Ende an einem radial nach außen ragenden Ringflansch 82 des ersten Halteblechs 78 axial ab, wird von einem axialen Abschnitt 84 des ersten Halteblechs 78 geführt und stützt sich mit ihrem gegenüberliegenden, anderen Ende an einem zweiten, im wesentlichen plattenförmigen Halteblech 86 ab. Wie aus den Figuren ersichtlich, durchsetzt das Eingangsglied 60 sowohl das erste Halteblech 78 als auch das zweite Halteblech 86 in axialer Richtung.

Die zweite Feder 74, die die beiden Haltebleche 78 und 86 axial auseinanderdrängt, hat eine spürbar größere Federkraft als die erste Feder 72. Im vorliegenden Ausführungsbeispiel ist dies dadurch erreicht, daß die Federkonstante der zweiten Feder 74 deutlich größer als die Federkonstante der ersten Feder 72 ist. Alternativ ist es jedoch auch möglich, dies dadurch zu erreichen, daß in der in Fig. 1 gezeigten Ausgangsstellung die erste Feder 72 zumindest annähernd entspannt ist, während die zweite Feder 74 in vorkomprimiertem Zustand, d.h. unter einer beträchtlichen Vorspannung stehend zwischen dem ersten Halteblech 78 und dem zweiten Halteblech 86 eingebaut wird. Die Federkonstanten der beiden Federn 72 und 74 brauchen sich dann nicht deutlich voneinander zu unterscheiden. Bei der zuletzt genannten Alternative muß die zweite Feder 74 allerdings an einer Expansion gehindert werden, um keine Betätigungskraft auf die Einheit 10 auszuüben. Dies kann beispielsweise durch eine Kammerung der zweiten Feder 74 geschehen.

Es wird nun die Funktion des in Fig. 1 dargestellten, ersten Ausführungsbeispiels beschrieben. Zum Betätigen der Bremskrafterzeuger/Hauptzylinder-Einheit 10 wird wie üblich das Bremspedal 58 vom Fahrzeugführer niedergedrückt. Das am Bremspedal 58 schwenkbar angelenkte Eingangsglied 60 wird dabei axial in das Gehäuse 12 verschoben und diese Verschiebung wird von einem geeignet mit dem Eingangsglied 60 oder dem Bremspedal 58 gekoppelten Wegsensor 88 erfaßt. Der auf dem zapfenförmigen Vorsprung 66 geführte Endabschnitt 62 des Eingangsgliedes 60 bewegt sich in die mit Hydraulikfluid gefüllte Dämpfungskammer 64 hinein, wobei Hydraulikfluid aus dem hohlen Endabschnitt 62 durch einen Kanal 90 im zapfenförmigen Vorsprung 66 in die Dämpfungskammer 64 verdrängt wird. Überschüssiges Hydraulikfluid in der Dämpfungskammer 64 strömt durch eine im Primärkolben 16 angeordnete Drossel 92 aus der Dämpfungskammer 64 heraus in einen Ringraum 94, der radial zwischen dem Primärkolben 16 und der Wand der Bohrung 14 angeordnet und mit dem Vorratsbehälter 32 verbunden ist. Das aus der Dämpfungskammer 64 verdrängte Flüssigkeitsvolumen entspricht dabei dem relativen Hub zwischen dem Eingangsglied 60 und dem Primärkolben 16. Der gedrosselte Abfluß von Hydraulikfluid aus der Dämpfungskammer 64 und der ebenfalls gedrosselte Zustrom von Hydraulikfluid in die Dämpfungskammer 64 bei einer Rückbewegung des Eingangsgliedes 60 dämpft dessen jeder gewollten Druckänderung vorhergehenden Bewegung wirksam. Zusätzlich zur Drossel 92 kann auch der Kanal 90 so ausgebildet sein, daß er drosselnd wirkt.

Die vom Wegsensor 88 erfaßte Verschiebung des Eingangsgliedes 60 wird von einem hier nicht dargestellten, elektronischen. Steuergerät verarbeitet, welches das Elektromagnetventil 50 in die Druckaufbaustellung steuert, in der unter Druck stehendes Hydraulikfluid aus dem Druckspeicher 46 in die Verstärkerkammer 44 gelangen kann. Die Druckaufbaustellung wird solange beibehalten, bis der der erfaßten Eingangsgliedverschiebung entsprechende Druck in der Verstärkerkammer 44 erreicht ist. Der sich aufbauende Druck in der Verstärkerkammer 44 hält einerseits den Hohlkolben 40 in seiner in Fig. 1 wiedergegebenen Ausgangsstellung und drückt andererseits den Primärkolben 16 nach links, wodurch in üblicherweise Druck in der ersten Druckkammer 22 erzeugt wird, der sich über eine entsprechende Verschiebung des Sekundärkolbens 18 nach links in die zweite Druckkammer 26 und aus den Druckkammern 22 und 26 in die angeschlossenen, hier nicht gezeigten Radbremsen fortpflanzt. Die Relativverschiebung zwischen dem hohlen Endabschnitt 62 des Eingangsgliedes 60 und dem zapfenförmigen Führungsvorsprung 66 wird dabei durch die Drossel 92 hydraulisch bedämpft.

Sobald ein der erfolgten Eingangsgliedverschiebung entsprechender Bremsdruck aufgebaut worden ist, was im dargestellten Ausführungsbeispiel mittels eines mit der ersten Druckkammer 22 verbundenen Drucksensors 98 erfaßt werden kann, wird das Elektromagnetventil 50 in seine Druckhaltestellung gesteuert, in der Hydraulikfluid aus der Verstärkerkammer 44 weder zu- noch abfließen kann.

Die beim Betätigen erfolgende Verschiebung des Eingangsgliedes 60 in den Hauptzylinder hinein wird über einen Ringbund 98 des Eingangsgliedes 60 auf das zweite Halteblech 86 übertragen, so daß die zweite Feder 74 entsprechend der Verschiebung des Eingangsgliedes 60 komprimiert wird. Ein das Bremspedal 58 betätigender Fahrer, der von der Einheit 10 auf direktem Weg keine Rückmeldung hinsichtlich des in den Druckkammern 22 und 26 aufgebauten Bremsdruckes erhält, bekommt somit durch die Gegenkraft der zweiten Feder 74 eine künstliche Bremsdruckrückmeldung mitgeteilt, die umso stärker ist, je weiter das Eingangsglied 60 verschoben worden ist und je mehr dementsprechend die Feder 74 komprimiert worden ist.

Soll die Betätigung der Einheit 10 beendet werden, nimmt der Fahrer den Fuß vom Bremspedal 58 und das Eingangsglied 60 bewegt sich aus dem Gehäuse 12 heraus zurück in seine Ausgangsstellung. Diese Rückbewegung wird vom Wegsensor 88 erkannt und das nicht dargestellte, elektronische Steuergerät steuert das Elektromagnetventil 50 in die in Fig. 1 wiedergegebene Druckabbaustellung, in der Hydraulikfluid aus der Verstärkerkammer 44 über das Elektromagnetventil 50, eine Verbindungsleitung 100, den Ringraum 94 und die Leitung 28 zurück in den Vorratsbehälter 32 strömen kann. Da der Hohlkolben 40 durch den Druck in der Verstärkerkammer 44 an einer Verschiebung in die Bohrung 14 hinein gehindert ist, bleibt die erste Feder 72 bei den zuvor beschriebenen Funktionsabläufen wirkungslos.

Im folgenden sei angenommen, daß die Verstärkerstufe 38 aus irgendeinem Grund defekt ist, daß also im Anschluß an ein Niederdrücken des Bremspedals 58 kein unter Druck stehendes Hydraulikfluid der Verstärkerkammer 44 zugeführt wird. Zwar wird auch in diesem Fall die Verschiebung des Eingangsgliedes 60 über den Ringbund 98 und das zweite Halteblech 86 auf die zweite Feder 74 übertragen, jedoch wird letztere nicht oder jedenfalls nicht merklich komprimiert, da die den Hohlkolben 40 in der Ausgangsstellung haltende Gegenkraft fehlt. Statt komprimiert zu werden, leitet die zweite Feder 74 deshalb die Betätigungskraft über das erste Halteblech 78 auf den Hohlkolben 40 weiter, der sich daraufhin aus seiner Ausgangsstellung löst und in die Bohrung 14 hinein verschiebt, wobei er den an ihm anliegenden Primärkolben 16 mitnimmt, so daß in den Druckkammern 22 und 26 Bremsdruck aufgebaut wird.

Die Verschiebung des Hohlkolbens 40 in die Bohrung 14 hinein führt dazu, daß die erste Feder 72 der Federanordnung 70 entsprechend komprimiert wird und somit anstelle der zweiten Feder 74 für eine Bremsdruckrückmeldung zum Bremspedal 58 sorgt. Da die Federkraft der ersten Feder 72 spürbar niedriger als die Federkraft der zweiten Feder 74 ist, kann die Betätigung der Einheit 10 auch bei ausgefallener Verstärkerstufe 38 mit relativ wenig Kraft erfolgen.

In einem späteren Stadium der Betätigung stößt der zapfenförmige Führungsvorsprung 66 des Primärkolbens 16 an den Grund des hohlen Endabschnitts 62 des Eingangsgliedes 60, wodurch das Eingangsglied 60 und der Primärkolben 16 mechanisch direkt gekoppelt sind. Jedes weitere Niederdrücken des Bremspedals 58 verschiebt jetzt unmittelbar den Primärkolben 16 in druckaufbauender Richtung.

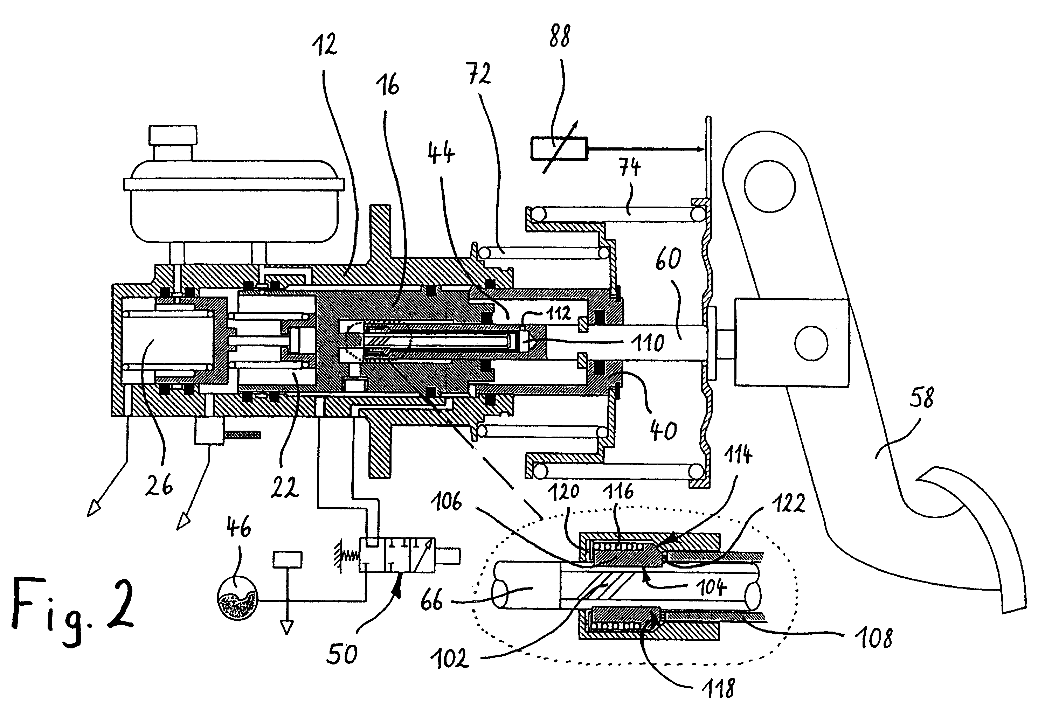

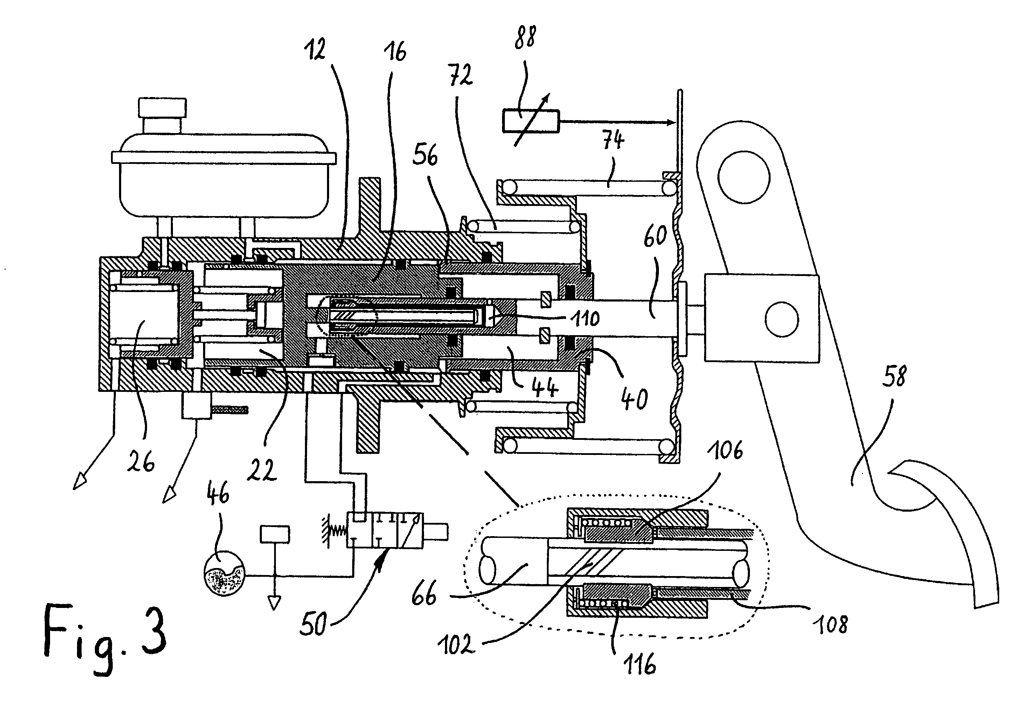

In den Figuren 2 und 3 ist ein etwas abgewandeltes, zweites Ausführungsbeispiel der Bremskrafterzeuger/Hauptzylinder-Einheit 10 dargestellt, das bezüglich der mechanischen Kopplung zwischen dem Eingangsglied 60 und dem Primärkolben 16 im Falle eines Defekts der hydraulischen Verstärkerstufe 38 verbessert ist. Hierzu ist der in der Dämpfungskammer 64 angeordnete, zapfenförmige Vorsprung 66 des Primärkolbens 16 mit einem Gewinde 102 versehen, mit dem sich ein Innengewinde 104 einer Hülse 106 in Eingriff befindet, die in dem hohlen Endabschnitt 62 des Eingangsgliedes 60 koaxial zum zapfenförmigen Vorsprung 66 angeordnet ist. Die Hülse 106 ist Teil einer druckabhängig schaltenden Kupplung zwischen dem Eingangsglied 60 und dem Primärkolben 16, die darüber hinaus noch eine sich axial an die Hülse 106 anschließenden und den zapfenförmigen Vorsprung 66 koaxial umgebende Druckhülse 108 aufweist. Die Druckhülse 108 ist an ihrem von der Hülse 106 entfernten Ende stirnseitig geschlossen, so daß in dem hohlen Endabschnitt 62 eine Kammer 110 gebildet ist, die über eine Querbohrung 112 in Fluidverbindung mit der Verstärkerkammer 44 steht.

Die Hülse 106 hat außen auf der der Druckhülse 108 zugewandten Seite einen Klemmkonus 114 und ist mittels einer Feder 116 in Richtung auf die Druckhülse 108 vorgespannt. Im hohlen Endabschnitt 62 des Eingangsgliedes 60 ist gegenüber dem Klemmkonus 114 ein komplementärer Klemmkonus 118 ausgebildet. Zwischen dem offenen Ende des hohlen Endabschnitts 62 und der Hülse 106 sowie zwischen der Hülse 106 und der Druckhülse 108 ist je ein Lager 120 bzw. 122 angeordnet, so daß die Hülse 106 sich um das Gewinde 102 des zapfenförmigen Vorsprungs 66 drehen kann, wenn die beiden Klemmkonen 114, 118 nicht miteinander in Eingriff sind.

Die Funktion der druckabhängig schaltenden Kupplung ist folgende: Sobald im Rahmen einer Bremsung der Verstärkerkammer 44 Hydraulikfluid unter Druck zugeleitet wird, gelangt der Druck in die Kammer 110 und verschiebt die Druckhülse 108 derart, daß Druck auf die Hülse 106 ausgeübt und somit die beiden Klemmkonen 114, 118 voneinander getrennt werden (sh. den Detailausschnitt in Fig. 2). Da die Gewindepaarung des Innengewindes 104 der Hülse 106 und des am Vorsprung 66 ausgebildeten Gewindes 102 selbsthemmungsfrei ist, dreht sich bei einer Verschiebung des Eingangsgliedes 60 in das Gehäuse 12 die Hülse 106 um den zapfenförmigen Vorsprung 66, ohne daß dadurch die Verschiebung des Eingangsgliedes 60 behindert wird.

Bei einem Funktionsausfall der hydraulischen Verstärkerstufe 38 ist in der Verstärkerkammer 44 und damit auch in der Kammer 110 kein Hydraulikdruck vorhanden, der die Druckhülse 108 verschieben könnte. Demzufolge werden die beiden Klemmkonen 114 und 118 durch die Feder 116 miteinander in Eingriff gepreßt (sh. den Detailausschnitt in Fig. 3) und die Hülse 106 kann sich nicht mehr um den zapfenförmigen Vorsprung 66 drehen. Eine Verschiebung des Eingangsgliedes 60 wird demnach ohne einen Betätigungswegverlust sofort auf den Primärkolben 16 übertragen.

## Patentansprüche

1. Vollhydraulische Bremskrafterzeuger/Hauptzylinder-Einheit (10) für eine Fahrzeugbremsanlage, mit
- einem Gehäuse (12) und einer darin ausgebildeten Bohrung (14), in der ein Primärkolben (16) abdichtend und verschieblich angeordnet ist,
- einem Eingangsglied (60) zum Betätigen der Bremskrafterzeuger/Hauptzylinder-Einheit, das sich beim Betätigen verschiebt,
- einer in der Bohrung (14) angeordneten, ersten Druckkammer (22), deren eine Begrenzungswand durch eine Stirnwand (20) des Primärkolbens (16) gebildet ist,
- einer auf den Primärkolben wirkenden hydraulischen Verstärkerstufe (38) zur Verstärkung der auf das Eingangsglied ausgeübten Betätigungskraft, die eine Verstärkerkammer (44) mit einem Einlaß für Hydraulikfluid unter Druck umfaßt,
- einer auf das Eingangsglied (60) entgegen einer Betätigungskraft wirkenden Federanordnung (70) zur Simulation einer Bremsdruckrückmeldung über das Eingangsglied,
**dadurch gekennzeichnet, daß**
- die Federanordnung (70) eine erste Feder (72) und eine zweite Feder (74) aufweist, die in Serie geschaltet sind, wobei die Federkraft der zweiten Feder (74) spürbar größer ist als die Federkraft der ersten Feder (72), und daß
- beim Betätigen der Bremskrafterzeuger/Hauptzylinder-Einheit im Falle eines Versagens der hydraulischen Verstärkerstufe im wesentlichen nur die Kraft der ersten Feder (72) die Bremsdruckrückmeldung übernimmt.

2. Bremskrafterzeuger/Hauptzylinder-Einheit nach Anspruch 1,
**dadurch gekennzeichnet, daß** beim Betätigen der Bremskrafterzeuger/Hauptzylinder-Einheit im Falle einer ordnungsgemäß funktionierenden hydraulischen Verstärkerstufe die erste Feder (72) hinsichtlich der Bremsdruckrückmeldung wirkungslos bleibt.

3. Bremskrafterzeuger/Hauptzylinder-Einheit nach Anspruch 1 oder 2,
**dadurch gekennzeichnet, daß** im Falle eines Versagens der hydraulischen Verstärkerstufe die zweite Feder (74) beim Betätigen der Bremskrafterzeuger/Hauptzylinder-Einheit gemeinsam mit dem Eingangsglied (60) nur verschoben wird, insbesondere relativ zum Gehäuse (12).

4. Bremskrafterzeuger/Hauptzylinder-Einheit nach einem der Ansprüche 1 bis 3,
**dadurch gekennzeichnet, daß** die Verstärkerstufe (38) einen in der Bohrung (14) verschiebbar geführten Kolben (40) aufweist, wobei die erste Feder (72) sich funktionell zwischen dem Gehäuse (12) und dem Kolben (40) abstützt und die zweite Feder (74) sich funktionell zwischen dem Kolben (40) und dem Eingangsglied (60) abstützt.

5. Bremskrafterzeuger/Hauptzylinder-Einheit nach Anspruch 4,
**dadurch gekennzeichnet, daß** der Kolben (40) ein tassenförmiger Hohlkolben ist und daß die Verstärkerkammer (44) von dem Hohlkolben (40) und von der der einen Stirnwand (20) gegenüberliegenden, anderen Stirnwand (42) des Primärkolbens (16) begrenzt ist.

6. Bremskrafterzeuger/Hauptzylinder-Einheit nach einem der vorhergehenden Ansprüche,
**dadurch gekennzeichnet, daß** die beim Betätigen der Bremskrafterzeuger/Hauptzylinder-Einheit erfolgende Verschiebung des Eingangsgliedes (60) bedämpft ist, insbesondere flüssigkeitsbedämpft.

7. Bremskrafterzeuger/Hauptzylinder-Einheit nach Anspruch 6,
**dadurch gekennzeichnet, daß** das der Bremskrafterzeuger/Hauptzylinder-Einheit zugewandte Ende des Eingangsgliedes (60) kolbenförmig ausgebildet ist und verschieblich in eine Dämpfungskammer (64) ragt, aus der durch eine Verschiebung des Eingangsgliedes (60) verdrängte Flüssigkeit nur durch eine Drossel (92) abfließen kann.

8. Bremskrafterzeuger/Hauptzylinder-Einheit nach Anspruch 7,
**dadurch gekennzeichnet, daß** das Eingangsglied (60) die Verstärkerstufe (38) durchsetzt und daß die Dämpfungskammer (64) im Primärkolben (16) angeordnet ist.

9. Bremskrafterzeuger/Hauptzylinder-Einheit nach Anspruch 8,
**dadurch gekennzeichnet, daß** ein Endabschnitt (62) des kolbenförmigen Endes des Eingangsgliedes (60) hohl ist und auf einem in der Dämpfungskammer (64) angeordneten zapfenförmigen Vorsprung (66) des Primärkolbens (16) geführt ist.

10. Bremskrafterzeuger/Hauptzylinder-Einheit nach Anspruch 9,
**dadurch gekennzeichnet, daß** der zapfenförmige Vorsprung (66) des Primärkolbens (16) einen Kanal (90) aufweist, dessen eines Ende in den hohlen Endabschnitt (62) des Eingangsgliedes (60) und dessen anderes Ende in die Dämpfungskammer (64) mündet.

11. Bremskrafterzeuger/Hauptzylinder-Einheit nach einem der vorhergehenden Ansprüche,
**dadurch gekennzeichnet, daß** das Eingangsglied (60) beim Betätigen der Bremskrafterzeuger/Hauptzylinder-Einheit automatisch mit dem Primärkolben (16) koppelt, wenn die hydraulische Verstärkerstufe (38) ausgefallen ist.

12. Bremskrafterzeuger/Hauptzylinder-Einheit nach Anspruch 11,
**dadurch gekennzeichnet, daß** ein hohler Endabschnitt (62) des Eingangsgliedes (60) auf einem zapfenförmigen Vorsprung (66) des Primärkolbens (16) geführt ist, daß der zapfenförmige Vorsprung (66) mit einem Gewinde (102) versehen ist, daß in dem hohlen Endabschnitt (62) des Eingangsgliedes (60) koaxial zum zapfenförmigen Vorsprung (66) eine um letzteren drehbare Hülse (106) mit einem Innengewinde (104) angeordnet ist, das mit dem Gewinde (102) selbsthemmungsfrei in Eingriff ist, daß die Hülse (106) einen Klemmkonus (114) aufweist und mit diesem federnd in einen Eingriff mit einem komplementären Klemmkonus (118) vorgespannt ist, welcher in dem hohlen Endabschnitt (62) des Eingangsgliedes (60) ausgebildet ist, und daß in dem hohlen Endabschnitt (62) des Eingangsgliedes (60) eine den zapfenförmigen Vorsprung (66) koaxial umgebende, axial verschiebbare Druckhülse (108) vorhanden ist, deren axiale Verschiebung gegen die federnde Vorspannung der Hülse (106) ein außer Eingriffkommen der beiden Klemmkonen (114, 118) bewirkt.

13. Bremskrafterzeuger/Hauptzylinder-Einheit nach Anspruch 12,
**dadurch gekennzeichnet, daß** der hohle Endabschnitt (62) des Eingangsgliedes (60) in Fluidverbindung mit der Verstärkerstufe (38) steht, derart, daß bei ordnungsgemäß funktionierender Verstärkerstufe der Hydraulikdruck in der Verstärkerstufe die Druckhülse (108) gegen die federnde Vorspannung der Hülse (106) verschiebt.

## Claims

1. A fully hydraulic brake power generator/master cylinder unit (10) for a vehicle brake system, comprising
- a housing (12) and a bore (14) which is formed therein and in which a primary piston (16) is sealingly and displaceably arranged,
- an input member (60) for actuating the brake power generator/ master cylinder unit, said input member being displaced during actuation,
- a first pressure chamber (22) which is arranged in the bore (14) and one boundary wall of which is formed by one end wall (20) of the primary piston (16),
- a hydraulic booster stage (38) acting on the primary piston for boosting the actuating force exerted on the input member, said booster stage (38) comprising a booster chamber (44) with an inlet for hydraulic fluid under pressure,
- a spring arrangement (70) acting on the input member (60) counter to an actuating force for simulating brake pressure feedback via the input member,
**characterised in that**
- the spring arrangement (70) has a first spring (72) and a second spring (74) which are connected in series, the spring force of the second spring (74) being detectably greater than the spring force of the first spring (72), and **in that**
- when the brake power generator/master cylinder unit is actuated, essentially only the force of the first spring (72) carries out brake pressure feedback if the hydraulic booster stage fails.

2. The brake power generator/master cylinder unit according to Claim 1,
**characterised in that**, when the brake power generator/master cylinder unit is actuated, the first spring (72) remains ineffective in terms of brake pressure feedback if the hydraulic booster stage is functioning properly.

3. The brake power generator/master cylinder unit according to Claim 1 or 2,
**characterised in that**, if the hydraulic booster stage fails, the second spring (74) is merely displaced together with the input member (60), in particular relative to the housing (12), when the brake power generator/master cylinder unit is actuated.

4. The brake power generator/master cylinder unit according to one of Claims 1 to 3,
**characterised in that** the booster stage (38) has a piston (40) guided displaceably in the bore (14), the first spring (72) being supported functionally between the housing (12) and the piston (40) and the second spring (74) being supported functionally between the piston (40) and the input member (60).

5. The brake power generator/master cylinder unit according to Claim 4,
**characterised in that** the piston (40) is a cup-shaped hollow piston, and **in that** the booster chamber (44) is delimited by the hollow piston (40) and by the other end wall (42), located opposite the end wall (20), of the primary piston (16).

6. The brake power generator/master cylinder unit according to one of the preceding claims,
**characterised in that** the displacement of the input member (60) taking place during actuation of the brake power generator/ master cylinder unit is damped, in particular fluid-damped.

7. The brake power generator/master cylinder unit according to Claim 6,
**characterised in that** that end of the input member (60) which faces the brake power generator/master cylinder unit is piston-shaped and projects displaceably into a damping chamber (64), out of which fluid displaced as a result of the input member (60) being displaced can flow off through a throttle (92) only.

8. The brake power generator/master cylinder unit according to Claim 7,
**characterised in that** the input member (60) passes through the booster stage (38) and **in that** the damping chamber (64) is arranged in the primary piston (16).

9. The brake power generator/master cylinder unit according to Claim 8,
**characterised in that** an end portion (62) of the piston-shaped end of the input member (60) is hollow and is guided on a pin-shaped projection (66) of the primary piston (16), said projection (66) being arranged in the damping chamber (64).

10. The brake power generator/master cylinder unit according to Claim 9,
**characterised in that** the pin-shaped projection (66) of the primary piston (16) has a duct (90), one end of which opens into the hollow end portion (62) of the input member (60) and the other end of which opens into the damping chamber (64).

11. The brake power generator/master cylinder unit according to one of the preceding claims,
**characterised in that**, when the brake power generator/master cylinder unit is actuated, the input member (60) is automatically coupled to the primary piston (16) if the hydraulic booster stage (38) has failed.

12. The brake power generator/master cylinder unit according to Claim 11,
**characterised in that** a hollow end portion (62) of the input member (60) is guided on a pin-shaped projection (66) of the primary piston (16), **in that** the pin-shaped projection (66) is provided with a thread (102), **in that** a sleeve (106) rotatable about the pin-shaped projection (66) is arranged in the hollow end portion (62) of the input member (60) coaxially to said projection and has an internal thread (104) which is in engagement, free of selflocking, with the thread (102), **in that** the sleeve (106) has a clamping cone (114) and is prestressed resiliently by means of the latter into engagement with a complementary clamping cone (118) which is formed in the hollow end portion (62) of the input member (60), and **in that** in the hollow end portion (62) of the input member (60) there is an axially displaceable thrust sleeve (108) which coaxially surrounds the pin-shaped projection (66) and of which the axial displacement counter to the resilient prestress of the sleeve (106) causes the two clamping cones (114, 118) to come out of engagement.

13. The brake power generator/master cylinder unit according to Claim 12,
**characterised in that** the hollow end portion (62) of the input member (60) is in fluid connection with the booster stage (38), in such a way that, when the booster stage is functioning properly, the hydraulic pressure in the booster stage displaces the thrust sleeve (108) counter to the resilient prestress of the sleeve (106).

## Revendications

1. Unité génératrice de force de freinage/de maître-cylindre (10), tout hydraulique, pour une installation de freinage pour véhicule, comportant
- un boîtier (12) dans lequel est ménagé un perçage (14), dans lequel un piston primaire (16) est disposé de façon étanche en pouvant coulisser,
- un organe d'entrée (60) pour actionner l'unité génératrice de force de freinage/de maître-cylindre, cet organe se déplaçant lors de l'actionnement,
- une première chambre de pression (22), ménagée dans le perçage (14), dont une paroi de délimitation est formée par une paroi frontale (20) du piston primaire (16),
- un étage amplificateur (38) hydraulique, agissant sur le piston primaire, afin d'amplifier la force d'actionnement exercée sur l'organe d'entrée, cet étage comprenant une chambre d'amplificateur (44) avec une admission pour du fluide hydraulique sous pression,
- un dispositif à ressort (70) agissant sur l'organe d'entrée (60), à l'encontre d'une force d'actionnement, pour assurer la simulation d'une information de retour de pression de freinage par intermédiaire de l'organe d'entrée,
**caractérisée en ce que**
- le dispositif à ressort (70) présente un premier ressort (72) et un deuxième ressort (74), branchés en série, la force élastique du deuxième ressort (74) étant nettement supérieure à la force élastique du premier ressort (72), et **en ce que**
- lors de l'actionnement de l'unité génératrice de force de freinage/de maître-cylindre, dans le cas d'une panne de l'étage amplificateur hydraulique, pratiquement seule la force du premier ressort (72) assure la fonction d'information de retour de la pression de freinage.

2. Unité génératrice de force de freinage/de maître-cylindre selon la revendication 1, **caractérisée en ce que**, lors de l'actionnement de l'unité génératrice de force de freinage/de maître-cylindre, dans le cas d'un étage amplificateur hydraulique fonctionnant de façon conforme, le premier ressort (72) reste sans effet du point de vue de l'information de retour de pression de freinage.

3. Unité génératrice de force de freinage/de maître-cylindre selon la revendication 1 ou 2, **caractérisée en ce que**, dans le cas de panne de l'étage amplificateur hydraulique, le deuxième ressort (74), lors de l'actionnement de l'unité génératrice de force de freinage/de maître-cylindre, ne fait que coulisser, conjointement avec l'organe d'entrée (60), en particulier par rapport au boîtier (12).

4. Unité génératrice de force de freinage/de maître-cylindre selon l'une des revendications 1 à 3, **caractérisée en ce que** l'étage amplificateur (38) présente un piston (40) guidé de façon coulissante, dans le perçage (14), le premier ressort (72) prenant appui fonctionnellement entre le boîtier (12) et le piston (40), et le deuxième ressort (74) prenant appui fonctionnellement entre le piston (40) et l'organe d'entrée (60).

5. Unité génératrice de force de freinage/de maître-cylindre selon la revendication 4, **caractérisée en ce que** le piston (40) est un piston creux en forme de tasse, et **en ce que** la chambre d'amplificateur (44) est délimitée par le piston creux (40) et par l'autre paroi frontale du piston primaire (16), opposée à la première paroi frontale (20).

6. Unité génératrice de force de freinage/de maître-cylindre selon l'une des revendications précédentes, **caractérisée en ce que** le coulissement, s'effectuant lors de l'actionnement de l'unité génératrice de force de freinage/de maître-cylindre, de l'organe d'entrée (60) est amorti, en particulier est amorti par un liquide.

7. Unité génératrice de force de freinage/de maître-cylindre selon la revendication 6, **caractérisée en ce que** l'extrémité, tournée vers l'unité génératrice de force de freinage/de maître-cylindre, de l'organe d'entrée (60) est conformée en piston et s'étend de façon coulissante dans une chambre d'amortissement (64) d'où du liquide, refoulé par un coulissement de l'organe d'entrée (60), ne peut s'évacuer que par un organe d'étranglement (92).

8. Unité génératrice de force de freinage/de maître-cylindre selon la revendication 7, **caractérisée en ce que** l'organe d'entrée (60) traverse l'étage amplificateur (38) et **en ce que** la chambre d'amortissement (64) est disposée dans le piston primaire (16).

9. Unité génératrice de force de freinage/de maître-cylindre selon la revendication 8, **caractérisé en ce qu'**une partie d'extrémité (62) de l'extrémité en forme de piston de l'organe d'entrée (60) est creuse et est guidée sur une saillie (66) en forme de téton du piston primaire (16), disposée dans la chambre d'amortissement (64).

10. Unité génératrice de force de freinage/de maître-cylindre selon la revendication 9, **caractérisée en ce que** la saillie (66) en forme de téton du piston primaire (16) présente un canal (90) dont une extrémité débouche dans la partie d'extrémité (62) creuse de l'organe d'entrée (60) et dont l'autre extrémité débouche dans la chambre d'amortissement (64).

11. Unité génératrice de force de freinage/de maître-cylindre selon l'une des revendications précédentes, **caractérisée en ce que** l'organe d'entrée (60), lors de l'actionnement de l'unité génératrice de force de freinage/de maître-cylindre, est automatiquement couplé au piston primaire (16) lorsque l'étage amplificateur hydraulique (38) tombe en panne.

12. Unité génératrice de force de freinage/de maître-cylindre selon la revendication 11, **caractérisée en ce qu'**une partie d'extrémité (62) creuse de l'organe d'entrée (60) est guidée sur une saillie (66) en forme de téton du piston primaire (16), **en ce que** la saillie (66) en forme de téton est munie d'un filetage (102), **en ce que**, dans la partie d'extrémité (62) creuse de l'organe d'entrée (60), est disposée, coaxialement par rapport à la saillie (66) en forme de téton, une douille (106) pouvant tourner autour de cette saillie et munie d'un filetage intérieur (104)qui vient en prise avec le filetage (102), d'une façon exempte d'autoblocage, **en ce que** la douille (106) présente un cône de serrage (114) et est sollicitée élastiquement avec celui-ci de manière à venir en prise avec un cône de serrage (118) complémentaire, qui est réalisé dans la partie d'extrémité (62) creuse de l'organe d'entrée (60), et **en ce que**, dans la partie d'extrémité (62) creuse de l'organe d'entrés (60), est prévue une douille de poussée (108), coulissant axialement et entourant coaxialement la saillie (66) en forme de téton, douille dont le déplacement axial à l'encontre de la sollicitation élastique de la douille (106) provoque une mise hors de prise des deux cônes de serrage (114, 118).

13. Unité génératrice de force de freinage/de maître-cylindre selon la revendication 12, **caractérisée en ce que** la partie d'extrémité (62) creuse de l'organe d'entrée (60) est mise en liaison fluidique avec l'étage amplificateur (38), de manière que, lorsque l'étage amplificateur fonctionne de façon conforme, la pression hydraulique dans l'étage amplificateur ait comme effet de déplacer la douille de poussée (108) à l'encontre de la sollicitation élastique de la douille (106).
